# EUROPEAN PATENT SPECIFICATION

(11) **EP 3 805 598 B1**
(45) Date of publication and mention of the grant of the patent: **24.05.2023**
(21) Application number: 19840395.8
(22) Date of filing: 09.07.2019
(51) Int. Cl.: F16F 15/023

(54) **GAS SPRING TYPE VIBRATION REMOVAL DEVICE**
GASFEDERARTIGE VIBRATIONSENTFERNUNGSVORRICHTUNG
DISPOSITIF D'ÉLIMINATION D'UNE VIBRATION DU TYPE DE RESSORT À GAZ

(30) Priority: 25.07.2018 JP 2018139204
(43) Date of publication of application: 14.04.2021
(73) Proprietor: Kurashiki Kako Co., Ltd., Kurashiki-shi, Okayama 712-8555 (JP)
(72) Inventor: SHIM, Seung Sup, Kurashiki-shi, Okayama 712-8555 (JP)
(74) Representative: advotec.
(86) International application number: PCT/JP2019/027149
(87) International publication number: WO 2020/022048

(56) References cited:
- JP-A- 2002 372 096
- JP-A- 2003 108 236
- JP-A- 2003 108 236
- JP-A- 2004 347 125
- JP-A- 2006 083 883
- JP-A- 2014 231 875
- JP-A- 2015 057 561
- JP-A- 2015 057 561
- JP-A- 2015 197 109
- US-A1- 2007 246 871

## Description

### TECHNICAL FIELD

The present disclosure relates to a gas spring type vibration isolator (vibration removal device).

### BACKGROUND ART

As this kind of gas spring type vibration isolator, for example, Patent Document 1 discloses a gas spring type vibration isolator including an up-down gas spring, which supports an object to be supported in the up-down direction with respect to a steel fixed base, and horizontal gas springs, which support the object horizontally.

In this vibration isolator, the horizontal gas springs are arranged to face each other so that central axes of the gas springs substantially coincide with each other at both horizontal side portions which sandwich the fixed base. The up-down gas spring and horizontal gas springs each include a recess provided so as to open outward in the fixed base, a piston disposed near the opening of the recess, and a diaphragm that blocks between the piston and an opening circumferential edge of the recess to partition into a gas chamber.

### CITATION LIST

### PATENT DOCUMENT

Patent Document 1: Japanese Patent No. 3799244

### SUMMARY OF THE INVENTION

### TECHNICAL PROBLEM

In the gas spring type vibration isolator, in order to lower the natural frequency in the up-down direction, there is a demand to increase a volume of the gas chamber of the up-down gas spring.

However, in the vibration isolator of Patent Document 1, as shown in FIG. 6, the recess of each of the horizontal gas springs is provided in a side wall member of the fixed base. This provision involves a problem that the volume of the gas chamber of the up-down gas spring cannot be increased.

In order to solve the above problem, it is considered that the side wall member of the fixed base may include, instead of the recess, an annular protrusion that projects outward and partitions into the gas chamber of each of the horizontal gas springs.

Although it is generally considered that the fixed base formed such a protrusion is processed by shaving a block of steel material, the shaving process has a problem that material yield deteriorates.

In view of the foregoing background, it is an object of the present disclosure to reduce deterioration of the material yield during the process and increase a volume of a gas chamber of an up-down gas spring.

### SOLUTION TO THE PROBLEM

A gas spring type vibration isolator disclosed herein includes an up-down gas spring that supports an object to be supported in the up-down direction and a horizontal gas spring that supports the object in the horizontal direction.

The gas spring type vibration isolator disclosed in document US2007/246871A1 is considered to represent the closest prior art and discloses the preamble of claim 1.

The up-down gas spring and the horizontal gas spring each have a recess formation member having a recess that opens outward, a piston disposed near the opening of the recess, and a diaphragm that blocks between the piston and an opening circumferential edge of the recess to partition a gas chamber.

The horizontal gas spring is configured to be detachably attached to an outer circumferential surface portion of the recess formation member in up-down gas spring.

With this configuration, the recess formation member (hereinafter also referred to as the horizontal recess formation member) in the horizontal gas spring is not recessed in the recess formation member (hereinafter also referred to as the up-down recess formation member) in the up-down gas spring, but attached to the outer circumferential surface portion of the up-down recess formation member. This attachment allows an increase in a volume of the gas chamber of the up-down gas spring that is partitioned by the up-down recess formation member. The horizontal recess formation member is not integral with the up-down recess formation member as a protrusion projecting outward but is detachably attached to the outer circumferential surface portion of the up-down recess formation member. This attachment avoids deterioration of the material yield during the process. As described above, this configuration allows avoidance of the reduction in deterioration of the material yield during the process and an increase in the volume of the gas chamber of the up-down gas spring.

An outer circumferential surface of the recess formation member in the up-down gas spring may have a fitting portion into which the horizontal gas spring is fitted.

With this configuration, the horizontal gas spring is attached by being fitted into the fitting portion formed in the outer circumferential surface of the up-down recess formation member. This attachment increases attachment strength of the horizontal gas spring.

The horizontal gas spring may be modularized.

With this configuration, the horizontal gas spring is easily and reliably detached. The horizontal gas spring itself becomes a functionally collected part, which is thus allowed to be used independently as a product.

The piston of the horizontal gas spring may have a load receiving member disposed on one side relatively far from the recess in a direction of a center axis of the piston; and a tubular piston body member spaced apart from the load receiving member on the axially other side and elastically held by the diaphragm to be swingable around a freely selected axis in a direction orthogonal to the center axis, the piston may be provided with a support column extending from the load receiving member toward the axially other side so as to penetrate a central hole of the piston body member may be provided, the piston body member may be provided with a bottomed tubular extending portion extending toward the axially other side so as to surround the support column, and a tip of the support column may be rotatably abutted on a bottom of the extending portion and pivotally supported.

With this configuration, in the horizontal gas spring, the piston body member swings around a freely selected axis in a vertical plane in response to vibration in the direction orthogonal to the axis, that is, vibration in the up-down direction, so that the load receiving member is pivotally supported by the bottom of the extending portion of the piston body member via the support column displaces in the up-down direction, whereby vibration is absorbed. At this time, a support point of the support column in the piston body member is located at a position axially inward relative to a holding position of the piston body member by the diaphragm, so that the spring characteristics of the diaphragm with respect to the displacement in the up-down direction of the load receiving member become very soft, whereby the natural frequency in the up-down direction can be reduced sufficiently.

### ADVANTAGES OF THE INVENTION

The present disclosure allows avoidance of the reduction in deterioration of the material yield during process and an increase in the volume of the gas chamber of the up-down gas spring.

### BRIEF DESCRIPTION OF THE DRAWINGS

[FIG. 1] FIG. 1 is a perspective view of an overall configuration of a precision vibration isolation table equipped with an isolator (gas spring type vibration isolator) according to the first embodiment of the present disclosure.
[FIG. 2] FIG. 2 is a perspective view of an overall configuration of an isolator.
[FIG. 3] FIG. 3 is a cross-sectional view taken along arrow line III-III of the isolator.
[FIG. 4] FIG. 4 is an exploded perspective view of the isolator.
[FIG. 5] FIG. 5 illustrates a general configuration of an active vibration damping control system of the isolator.

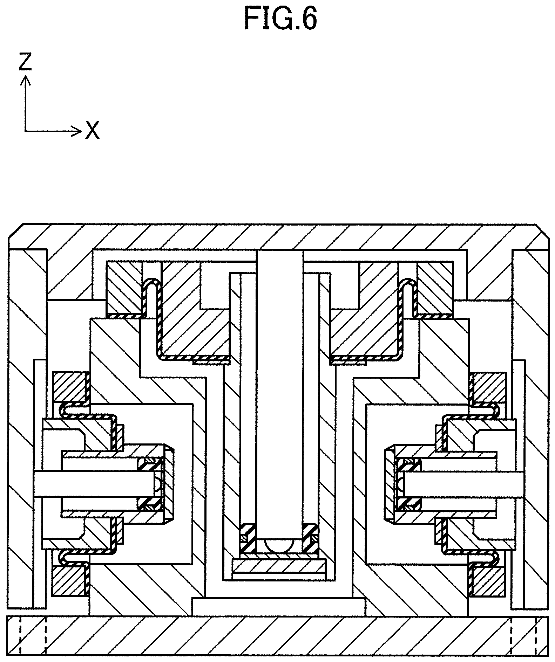

[FIG. 6] FIG. 6 is a view corresponding to FIG. 3, illustrating an isolator of prior art.

### DESCRIPTION OF EMBODIMENTS

Embodiments of the present disclosure will be described in detail below with reference to the drawings. The following description of preferred embodiments is merely an example in nature, and is not intended to limit the scope, applications or use of the present disclosure.

### (First Embodiment)

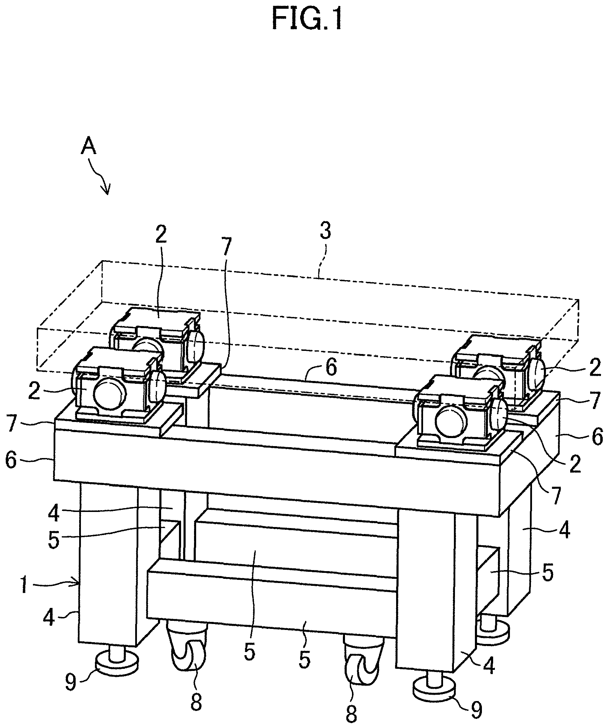

FIG. 1 shows an example of a precision vibration isolation table A using an isolator 2 (gas spring type vibration isolator) according to the present disclosure. The precision vibration isolation table A is, for example, equipped with precision instruments such as a semiconductor inspection apparatus, an electron microscope, and an optical measuring device (not shown) and is configured to install these instruments with substantially insulated from vibration transmitted from the floor. That is, a schematic configuration of the precision vibration isolation table A includes, as illustrated, a lower structure portion 1 installed on a floor surface, air spring type isolators 2, 2, ... arranged at respective four corners of an upper surface of the lower structure portion 1, and a mounting board 3 (object to be supported) mounted on upper portions of the four isolators 2, 2, ....

The lower structure portion 1 is formed by assembling structural members of steel-made square pipes so as to form a substantially cuboid framework. The lower structure portion 1 includes four leg portions 4, 4, ... that extend in the up-down direction, lower beam portions 5, 5, ... that extend horizontally so as to connect the two adjacent leg portions 4, 4 to each other on a lower end side, and upper beam portions 6, 6, ... that are arranged so as to surround outer circumferences of upper end sides of the four leg portions 4, 4, ..., that form a substantially rectangular frame shape in a plan view, and that have respective inner surfaces joined to outer surfaces of the leg portions 4, 4, ... and upper surfaces positioned on the same plane as upper end surfaces of the leg portions 4, 4, .... Horizontal plates 7, 7, ... are arranged from the upper end surfaces of the respective leg portions 4 to the upper surfaces of the respective upper beam portions 6, 6 surrounding the outside thereof, and the isolators 2 are arranged on the respective horizontal plates 7. In addition, two each of mobile casters 8, 8, ... are arranged on each lower surface of the two lower beam portions 5, 5 extending in a longitudinal direction of the lower structure portion 1, and height adjustment levelers 9, 9, ... are arranged on the respective lower end surfaces of the leg portions 4.

### (Configuration of Isolator)

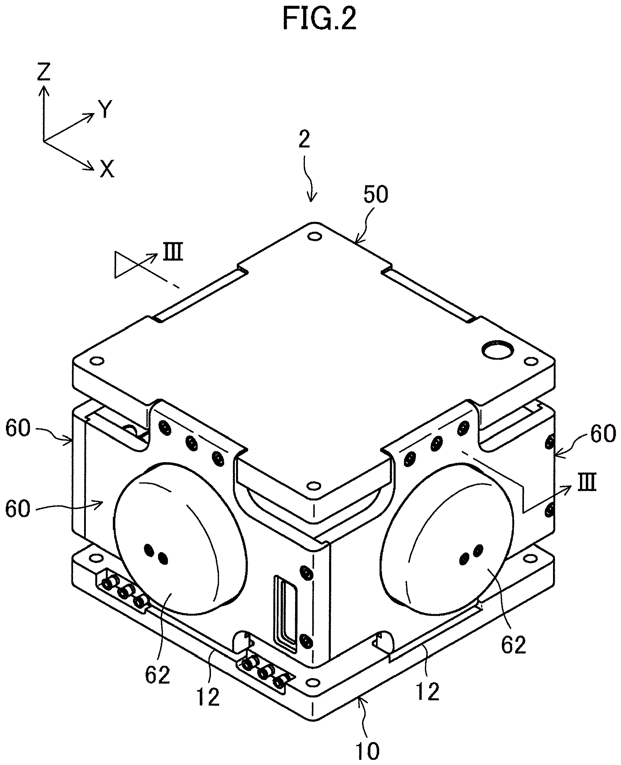

Next, a configuration of the isolator 2 will be described with reference to FIGS. 2 to 4. Herein, in the drawings, an X direction is referred to as a left-right direction (horizontal direction), a Y direction is referred to as a front-rear direction (horizontal direction), and a Z direction is referred to as an up-down direction (vertical direction).

The isolator 2 has an up-down air spring S1 disposed at an upper portion of a base plate 10, which will be described later, and horizontal air springs S2, S2, ... disposed at an outer circumferential surface portion of an inner casing 20, which will be described later, of the air spring S1.

A lower surface of the base plate 10 is fixed to the lower structure portion 1 of the precision vibration isolation table A via the horizontal plate 7 (see also FIG. 1), while the air spring S1 is disposed on an upper surface of the base plate 10 to be attached and fixed. The base plate 10 is formed from a metallic material such as an aluminum alloy in a substantially rectangular plate shape with the respective sides facing front, rear, left, and right. A circular recess 11 that opens upward and has a circular shape as viewed in the up-down direction is formed at a central portion of the upper surface of the base plate 10, and a lower end portion (protrusion 27, which will be described later) of the air spring S1 is fitted into the recess 11. At respective intermediate portions at front, rear, left, and right outer edges of the base plate 10, notch portions 12 recessed downward for guiding a lower edge of a side plate 60, which will be described later, is formed.

### (Configuration of Up-Down Air Spring)

The up-down air spring S1 supports the mounting board 3 in the up-down direction and has the inner casing 20 (recess formation member) having a recess 21 that opens upward and outward at a central portion of an upper surface, a piston 30 disposed near the opening 22 of the recess 21, and a diaphragm 40 that blocks between the piston 30 and a circumferential edge of the opening 22 of the recess 21 to partition an air chamber 23 (gas chamber).

The inner casing 20 is formed by shaving a block such as an aluminum alloy block. The inner casing 20 includes a base 24 in a substantially octagonal shape as viewed in the up-down direction, formed by chamfering corners of a cuboid, and a circular protrusion 27 projected to extend downward from a central portion of a lower end of the base 24.

The base 24 of the inner casing 20 has four side wall portions 25, 25, ... and four chamfering portions 26, 26, ... each arranged between circumferentially adjacent side wall portions 25, 25. The respective side wall portions 25, 25, ... of the base 24 face front, rear, left, and right. A circular fitting recess 28 (fitting portion) that opens outward and with which an axially inner end portion (a flange portion 250 and a fitting protrusion 260, which will be described later) of the horizontal air spring S2 is fittable formed in an outer surface of a central portion of the side wall portion 25. The fitting recess 28 includes an outside portion 28a with which the flange portion 250 is fittable, and an inside portion 28c that is continuously arranged inside the outside portion 28a via a step portion 28b and has an opening diameter smaller than the outside portion 28a and with which the fitting protrusion 260 is fittable.

A substantially rectangular attachment recess 29 to which a servo valve 75, a control substrate 76, and the like are attached is formed in an outer surface of the chamfering portion 26 of the base 24 from a substantially intermediate portion in the up-down direction to a lower portion.

The protrusion 27 of the inner casing 20 has a smaller area than the base 24 of the inner casing 20 as viewed in the up-down direction and is formed so as to be fitted into the recess 11 of the base plate 10.

The recess 21 of the inner casing 20 is formed into a circular shape as viewed in the up-down direction. Specifically, the recess 21 includes an upper portion 21a formed at a portion corresponding to the base 24 of the inner casing 20 and a lower portion 21b provided at a portion corresponding to the protrusion 27 of the inner casing 20 and is continuous to the upper portion 21a via a step portion so as to have an opening diameter smaller than the upper portion 21a. Consequently, the opening 22 is formed in a central portion of an upper surface of the inner casing 20, and the upper portion 21a and the lower portion 21b open outward by the opening 22.

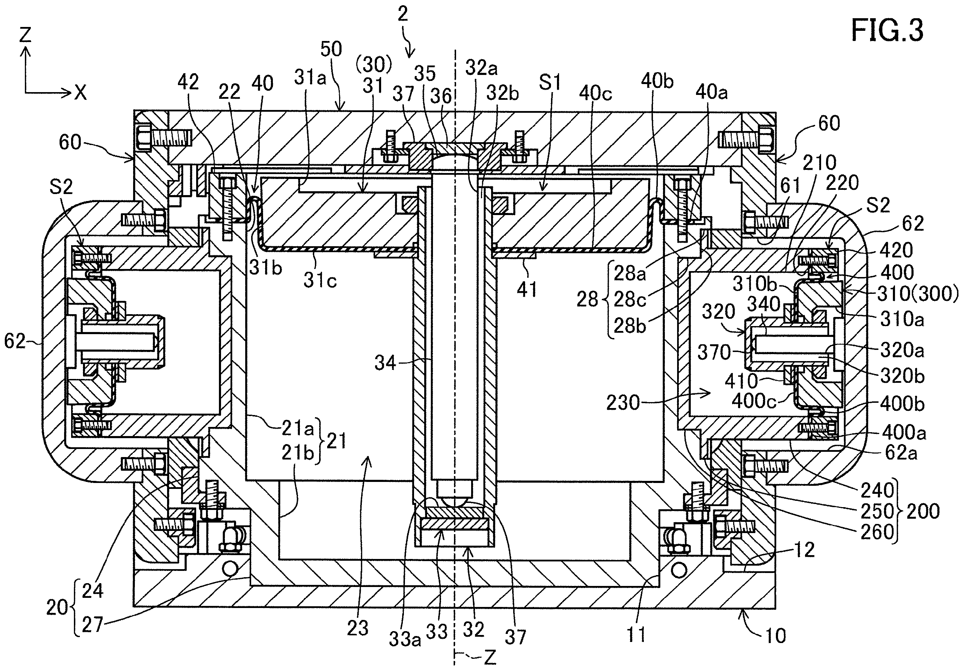

A donut-shaped piston body 31 constituting the piston 30 of the air spring S1 is inserted into the opening 22 of the inner casing 20. The piston body 31 is formed of an aluminum alloy, and a central hole 31a having a circular cross section penetrates in the up-down direction along an axis line Z shown in FIG. 3, while a tapered surface 31b having a diameter that is slightly reduced toward a lower end is formed on about a half of a lower side of an outer circumference thereof. The annular diaphragm 40 is arranged to cover from the lower end surface 31c of the piston body 31 to the tapered surface 31b on the outer circumferential side of the piston body 3 1 and to further extend to block from the tapered surface 31b to the circumferential edge of the opening 22. That is, the diaphragm 40 and the piston body 31 block a space between the piston 30 and the circumferential edge of the opening 22 of the inner casing 20, and the air chamber 23 is formed inside the space (i.e., the recess 21). The lower end surface 31c of the piston body 31 faces the air chamber 23 to receive air pressure, thereby configuring the up-down air spring S1 that supports a load in an up-down direction.

The diaphragm 40 is made from a rubber elastic film in which woven fabric of polyester fibers is embedded as a reinforcing material, and after the diaphragm 40 is temporarily formed in a hat shape with a round hole in the center portion, a circumferential wall portion of the hat is curved in the middle and folded downward to form a deep dish shape. That is, in the diaphragm 40, an annular roll portion 40b curved convexly upward is formed continuous to an inner circumferential end edge of an outer circumferential flange portion 40a corresponding to a brim of the hat. An inner circumferential end edge portion of the roll portion 40b extends below the outer circumferential flange portion 40a, from which the inner circumferential flange portion 40c is formed further toward the inner circumferential side to enclose the circular hole.

The inner circumferential flange portion 40c of the diaphragm 40 adheres to the lower end surface 31c of the piston body 31, and is firmly crimped to the piston body 31 by a washer 41 from below. On the other hand, the outer circumferential flange portion 40a of the diaphragm 40 is adhered to the upper surface of the inner casing 20, and a fastening ring 42 arranged on an upper portion thereof is fastened to the upper surface of the inner casing 20 by a bolt, whereby the outer circumferential flange portion 40a is sandwiched between a lower surface of the fastening ring 42 and the upper surface of the inner casing 20.

Thus, in the diaphragm 40 thus arranged, the annular roll portion 40b is bent largely and substantially evenly over the entire circumference to undulate up and down between the piston body 31 and the fastening ring 42. Thus, the diaphragm 40 has great flexibility for displacement of the piston body 31 in the up-down direction. Further, the diaphragm 40 is bent in an opposite direction at the roll portions 40b on both of the left and right sides that sandwich the piston body 31, so that the piston body 31 easily swings around any horizontal axis. On the other hand, the diaphragm 40 has extremely small flexibility with respect to displacement in the horizontal direction of the piston body 31, and therefore, the piston 30 hardly displaces in the horizontal direction.

A cylindrical piston well 32 (extending portion) is attached to the lower end surface 31c of the piston body 31 so as to extend substantially vertically downward from the inner circumferential side thereof. The piston well 32 is made from the same aluminum alloy as the piston body 31, and an upper end portion of the piston well 32 is slightly reduced in diameter to provide a reduced diameter portion 32a screwed into the central hole 31a of the piston body 31. A male screw provided on an outer circumference of the reduced diameter portion 32a is screwed with a female screw provided on an inner circumference of the central hole 31a, so that an upper end side of the piston well 32 is firmly fastened to the piston body 31 along with the washer 41. A tip of the reduced diameter portion 32a of the piston well 32 projects into the central hole 31a of the piston body 31, and an upper end of a hollow portion 32b of the piston well 32 communicates with the central hole 31a, while a lower end of the hollow portion 32b is closed by a disk-shaped steel cap 33, and, in order to support a lower end portion of a support rod 34, which will be described later, a well slug 33a that has been heat-treated to increase the surface hardness is formed on an upper surface of the cap 33.

On the other hand, a top plate 50 (load receiving member) in contact with the mounting board 3 is disposed above the piston body 31 to be spaced apart from the piston body 31. The top plate 50 is formed from a metallic material such as an aluminum alloy in a substantially rectangular plate shape in which the respective sides face front, rear, left, and right and forms a ceiling portion of the inner casing 20 of the isolator 2. Upper edges of substantially cross-shaped side plates 60, 60, ... each having a circular opening 61 formed in the central portion are detachably fastened to central portions of front, rear, left, and right outer edges of the top plate 50 by bolts so as to hang downward, and a lower edge of each of the side plates 60, 60, ... extends to the vicinity of a bottom surface of the notch portion 12 of the base plate 10. The circumferentially adjacent side plates 60, 60 are detachably fastened and connected to each other by bolts.

In the present embodiment, a so-called dome gimbal piston is employed as the up-down air spring S1. Specifically, a thick disk-shaped rolling element 35 is arranged at an upper end portion of the support rod 34 that supports the top plate 50. An upper surface of the rolling element 35 is spherical, and a substantially central portion of a lower surface of the top plate 50 (specifically, an abutment member 36 for receiving the upper surface of the rolling element 35, which is arranged at the substantially central portion of the lower surface of the top plate 50) is abutted on the upper surface of the rolling element 35 and is supported to roll freely. The rolling element 35 is arranged inside a ring member 37 fastened to the lower surface of the top plate 50.

The support rod 34 penetrates the central hole 31a of the piston body 31 and the hollow portion 32b of the piston well 32 and extends substantially vertically downward, and a steel ball 37 arranged at the lower end portion thereof is abutted on the well slug 33a so as to roll freely. Although not shown, a rubber elastic ring with an embedded core is externally fitted on the lower end side of the support rod 34, so that the lower end portion of the support rod 34 is always positioned on the axis line Z. Specifically, the top plate 50 is pivotally supported at a bottom of the piston well 32 via the rolling element 35 and the support rod 34, and is rotatable around a freely selected axis in the horizontal direction with respect to the piston body 31.

With a proper air pressure being supplied to the air chamber 23, the lower surface of the top plate 50 is spaced apart from an upper surface of the fastening ring 42 below the top plate 50 to face in the up-down direction. On the other hand, for example, when the air in the air chamber 23 is released to significantly reduce the air pressure, the lower surface of the top plate 50 is abutted on the upper surface of the fastening ring 42 and is supported by the inner casing 20 via the fastening ring 42.

As described above, the isolator 2 of the present embodiment is supported by the up-down air spring S1 so that the top plate 50 and the piston body 31 are substantially integrated and displaced in the up-down direction, and the top plate 50 is pivotally supported by the rolling element 35 and the support rod 34 with respect to the piston body 31, and the piston body 31 is swingably supported by the diaphragm 40. The top plate 50, the rolling element 35, the support rod 34, and the piston body 31 constitute the so-called dome gimbal piston. Consequently, as a characteristic of the air spring, the natural frequency of vibration in the up-down direction which is the axial direction appears in an extremely low frequency range of about 0.7 to about 1.5 Hz, and an excellent vibration isolation performance is obtained over a wide frequency range.

In the up-down air spring S1, the vibration is absorbed not only by a swinging motion of the piston body 31 but also by a rolling motion between the top plate 50 and the rolling element 35 with respect to the vibration in the horizontal direction, so that the spring characteristics in the horizontal direction of the isolator 2 become even softer, and the vibration isolation performance can be further improved.

With respect to the vibration in the horizontal direction, when the inner casing 20 and the support rod 34 are displaced horizontally, the piston body 31 is held by the diaphragm 40 and swings around a freely selected axis in the horizontal direction, whereby the vibration is absorbed. At this time, since a position where the lower end portion of the support rod 34 is pivotally supported by the well slug 33a is lower than a holding position of the piston body 31 by the diaphragm 40, the spring characteristics of the diaphragm 40 become very soft, so that the vibration isolation performance of the isolator 2 in the horizontal direction is as excellent as in the up-down direction.

The load in the up-down direction (axial load) acting on the swinging piston body 31 as described above via the support rod 34 avoids the swing of the piston body 31 and becomes a restoring force attempting to return the piston body 31 to a neutral state. When the piston body 31 is returned to the neutral state by the restoring force and the support rod 34 extends vertically, the top plate 50 also returns to a predetermined origin position before being displaced horizontally. Specifically, in the isolator 2, the dome gimbal piston of the up-down air spring S1 has a kinetic self-centering action different from that due to a spring force of an elastic member or the like, and thus a required positioning accuracy can be obtained.

### (Configuration of Horizontal Air Spring)

In the isolator 2 of the present embodiment, as an actuator for active vibration damping control, which will be described later, the horizontal air springs S2, S2, ... is arranged one by one at each of the front, rear, left, and right outer circumferential surface portions of the inner casing 20 in the up-down air spring S1 and detachably attached. The air spring S2 is modularized to become a functionally collected part.

Each of the air springs S2 horizontally supports the mounting board 3 and has a bottomed, lidless and cylindrical outer casing 200 (recess formation member) having a recess 210 that opens outward in the axial direction at a central portion of its axially outer end surface, a piston 300 disposed near the opening 220 of the recess 210, and a diaphragm 400 that blocks between the piston 300 and a circumferential edge of the opening 220 of the recess 210 to partition an air chamber 230 (gas chamber).

Similarly to the inner casing 20 in the air spring S1, the outer casing 200 is formed by shaving a block such as an aluminum alloy block. The outer casing 200 includes: a bottomless, lidless and cylindrical tubular portion 240; an annular flange portion 250 integral with an outer circumferential surface of the axially inner end portion of the tubular portion 240; and a bottomed, lidless and cylindrical fitting protrusion 260 that is arranged continuous to the inside in the axial direction of the tubular portion 240 and has an outer diameter smaller than that of the tubular portion 240. The outer diameter of the tubular portion 240 is smaller than the opening diameter of the opening 61 of the side plate 60. The tubular portion 240 is inserted through (into) the opening 61 of the side plate 60. The outer diameter and thickness of the flange portion 250 are large enough to be fitted into the outside portion 28a of the fitting recess 28 of the inner casing 20. A plurality of bolt holes 251 for allowing bolts (not shown) to be inserted therethrough are formed in the flange portion 250 at equal intervals around the circumference. The flange portion 250 is fastened to the inner casing 20 by screwing the bolt inserted through the bolt hole 251 into a screw hole 28d formed in the step portion 28b of the fitting recess 28. The outer diameter and thickness of the fitting protrusion 260 are large enough to be fitted into the inside portion 28c of the fitting recess 28 of the inner casing 20.

The recess 210 of the outer casing 200 is formed into a circular shape as viewed in the axial direction. Consequently, the opening 220 is formed in a central portion of an axially outer end surface of the outer casing 200, and the recess 210 opens outward by the opening 220.

A piston body 310 having a central hole 310a similar to the up-down air spring S1 is disposed so as to be inserted through the opening 220 of the outer casing 200 and spaced apart from a cover cap 62, which will be described later, of the side plate 60 in the left-right direction. An annular diaphragm 400 is arranged between each of the piston bodies 310 and the circumferential edge of the opening 220 of the recess 210. That is, the diaphragm 400 and the piston body 310 blocks a space between the piston 300 and the circumferential edge of the opening 220 of the outer casing 200, and the air chamber 230 is partitioned inside the space (i.e., the recess 210). A pressure receiving surface 310b (axially inner end surface) of the piston body 310 facing the air chamber 230 receives air pressure, thereby configuring the horizontal air spring S2 that supports a horizontal load.

An inner circumferential flange portion 400c of the diaphragm 400 is fixed to the pressure receiving surface 310b of the piston body 310 by a washer 410, while an outer circumferential flange portion 400a of the diaphragm 400 is sandwiched between an upper surface of the outer casing 200 and a fastening ring 420, and an annular roll portion 400b of the diaphragm 400 is located between an outer circumference of the piston body 310 and the fastening ring 420. The annular roll portion 400b is bent and deforms so as to undulate, so that the piston body 310 is largely displaced in the front-rear direction or the left-right direction, which is the axial direction, and swings around a freely selected axis orthogonal to the axial direction. A bottomed, lidless and cylindrical piston well 320 (extending portion) is attached to the piston body 310 so as to extend in the front-rear direction or the left-right direction, which is the axial direction, and a hollow portion 320b of the piston well 320 and the central hole 310a of the piston body 310 communicate with each other to form a well slug (not shown) on a bottom surface of the piston well 320.

On the other hand, the cover cap 62 (load receiving member) that covers the opening 61 of the side plate 60 is disposed on the axially outer side of the piston body 310 so as to be spaced apart from the piston body 310. The cover cap 62 is formed from a metallic material such as an aluminum alloy in a substantially bottomed and cylindrical shape that opens axially inward, and a hollow portion 62a of the cover cap 62 accommodates an axially outer end portion of the outer casing 200, specifically, a portion of the outer casing 200 projecting axially outward from the opening 61 of the side plate 60. The cover cap 62 is detachably fastened to an outer circumferential edge portion of the opening 61 on an outer surface of the side plate 60 at an axially inner end surface of the cover cap 62 by a bolt. The isolator 2 has a substantially cuboid shape in a completed state in which the side plate 60 and the cover cap 62 are attached to the top plate 50.

An axially outer end portion of the support rod 340 (support column) extending in the front-rear direction or the left-right direction, which is the axial direction, is detachably fastened to a central portion of a bottom surface of the cover cap 62, and the rolling element 35 is not interposed unlike the up-down air spring S1. That is, in the present embodiment, a so-called gimbal piston is employed as the air spring in the horizontal air spring S2.

In this gimbal piston, the support rod 340 that penetrates the hollow portion 320b of the piston well 320 and horizontally extends to be coaxial with the piston well 320 is disposed. A proximal end of the support rod 340 is fastened to the cover cap 62 of the side plate 60, while a steel ball 370 is arranged at a tip of the support rod 340 so as to be rotatably abutted on the well slug, and a rubber elastic ring (not shown) is externally fitted.

Other configurations of the horizontal air spring S2 are almost the same as those of the up-down air spring S1.

As described above, in the horizontal air spring S2, the cover cap 62 covering the opening 61 of the side plate 60 is pivotally supported at a bottom of the piston well 320 via the support rod 340. The piston body 310 integral with the piston well 320 is swingably held by the diaphragm 400. The cover cap 62, the support rod 340, and the piston body 310 constitute the gimbal piston. With a proper air pressure being supplied to the air chamber 230, the cover cap 62 and the piston body 310 are substantially integral with each other and supported in the front-rear direction or the left-right direction, which is the axial direction of the air spring S2, and extremely soft spring characteristics can be obtained in the axial direction. Further, in the same manner as in the up-down air spring S1, due to the function of the gimbal piston, extremely soft spring characteristics can be obtained also in the up-down direction or the left-right direction (or the front-rear direction) which is the direction orthogonal to the axis, whereby excellent vibration isolation performance can be obtained.

In addition, in the horizontal air spring S2, an axial load acting on the swinging piston body 310 from the support rod 340 avoids the swing of the piston body 310 and becomes the restoring force attempting to return the piston body 310 to a neutral state. Therefore, the horizontal air spring S2 also has a kinetic self-centering action as in the up-down air spring S1, whereby a required positioning accuracy can be obtained.

In the present embodiment, the dome gimbal piston is employed as the up-down air spring S1. Thus, the horizontal restoring force also decreases due to a decrease in horizontal spring constant; however, in the left-right direction, for example, the restoring force can be obtained by the left-right air springs S2, S2, so that the positioning accuracy is sufficiently high. Of the four isolators 2, 2, ... of the vibration isolation table A, if the two isolators 2, 2 are provided with a pair of the air springs S2, S2 in the left-right direction, and if the remaining two isolators 2, 2 are provided with a pair of the air springs S2, S2 in the front-rear direction, the vibration isolation table A can obtain just enough positioning accuracy in the entire horizontal direction.

Each of the air springs S2 configured as described above is modularized as one unit having the outer casing 200, the piston 300, and the diaphragm 400. This modular structure does not include the side plate 60, the cover cap 62, and the support rod 340 attached to the cover cap 62.

### (Attaching and Detaching of Horizontal Air Spring)

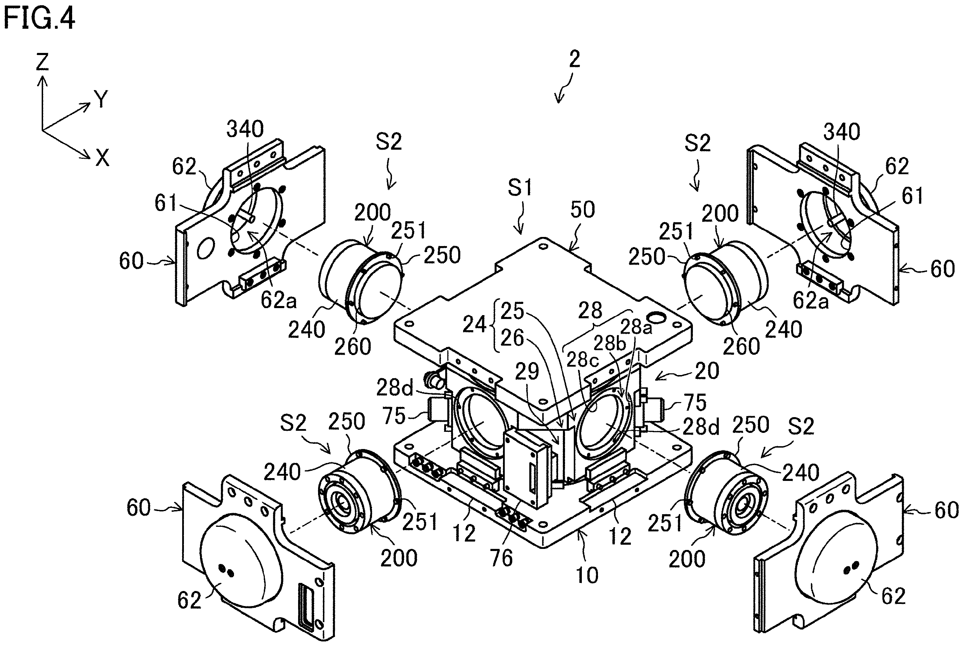

Next, attaching and detaching of the horizontal air springs S2, S2, ... to and from the up-down air spring S1 will be described with reference to FIG. 4.

First, the flange portion 250 and the fitting protrusion 260 of the outer casing 200 in each of the air springs S2 are fitted respectively into the outside portion 28a and the inside portion 28c of the fitting recess 28 formed in the outer circumferential surface portion (the side wall portion 25 of the base 24) of the inner casing 20 in the air spring S1. In this fitted state, the flange portion 250 is screwed into the screw hole 28d formed in the step portion 28b of the fitting recess 28 by the bolt inserted through the bolt hole 251. This process allows the air springs S2 to be attached to the air spring S1.

Next, the side plate 60 with the cover cap 62 and the support rod 340 attached is fastened to the top plate 50 with the outer casing 200 inserted through the opening 61. Then, the circumferentially adjacent side plates 60, 60 are fastened to each other with bolts. This process allows the isolator 2 to be assembled.

On the other hand, when the air springs S2 are detached from the air spring S1, the processes may be performed in reverse.

As described above, in the isolator 2, the horizontal air springs S2 are attached to and detached from the outer circumferential surface portion of the inner casing 20 as needed.

### (Control of Air Pressure)

The precision vibration isolation table A according to this embodiment has a so-called active vibration damping function of not only avoiding transmission of vibration from the floor by the four isolators 2, 2, ... as described above, but also controlling the pressure of the air springs S1, S2 in each of the isolators 2, 2, ... by a controller 70 and positively applying control vibrations in the up-down direction and the horizontal direction to the mounting board 3 so that vibrations generated from instruments on the mounting board 3 can be actively reduced.

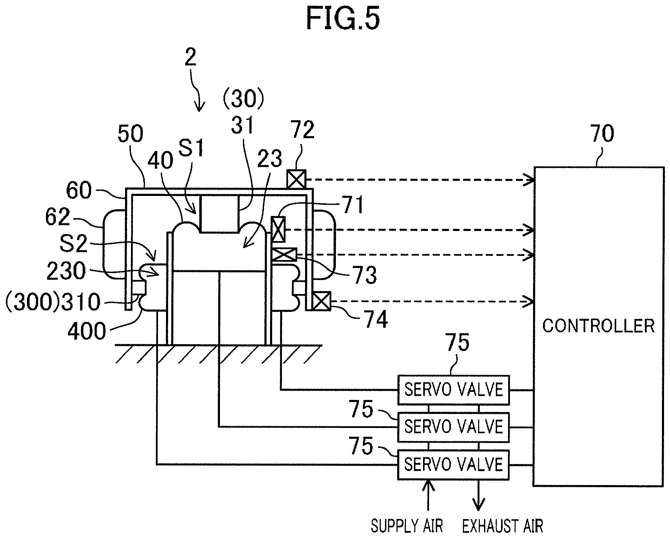

That is, as shown schematically in FIG. 5, a non-contact displacement sensor 71 and an acceleration sensor 72 that detect, respectively, displacement and acceleration in the up-down direction of the top plate 50, and a displacement sensor 73 and an acceleration sensor 74 that detect, respectively, displacement and acceleration in the horizontal direction of the side plate 60 are arranged in each of the isolators 2, and an output signal from each of the sensors 71 to 74 is input to the controller 70. On the other hand, a control signal from the controller 70 is output to the servo valves 75, 75, ... each of the air springs S1, S2, ... of the isolator 2, and by operation of each of the servo valves 75 that has received this control signal, air supply/exhaust flow rates to the air chambers 23, 230, ... of the respective air springs are adjusted, and the pressure of each of the air springs is changed promptly. Although not shown, the servo valve 75 is connected to a reservoir tank that stores compressed air, and the air pressure in the reservoir tank is maintained at a predetermined value by operation of an electric pump connected to the reservoir tank in the same manner.

### (Advantages)

According to the isolator 2 configured as described above, the outer casing 200 of each of the horizontal air springs S2 is not recessed in the inner casing 20 of the air spring S1 in the up-down direction, but is attached to the outer circumferential surface portion of the inner casing 20. Therefore, the volume of the air chamber 23 of the up-down air spring S1 partitioned by the inner casing 20 can be increased. The outer casing 200 is not integral with the inner casing 20 as a protrusion projecting outward but is detachably attached to the outer circumferential surface portion of the inner casing 20, and therefore, deterioration of the material yield during process is reduced (improvement in workability). According to the above, it is possible to reduce deterioration of the material yield during process and increase the volume of the air chamber 23 of the up-down air spring S1. The sharing of the inner casing 20 allows the sharing of the up-down air spring S1. This sharing allows improvement in productivity of the up-down air spring S1 and shortening of product delivery time.

Further, the horizontal air spring air spring S2 is attached by being fitted into the fitting recess 28 formed in the outer circumferential surface of the inner casing 20, thereby increasing attachment strength of the air spring S2.

The horizontal air spring S2 is modularized. This modularization allows the attachment and the detachment to be performed easily and reliably. The horizontal air spring S2 itself becomes a functionally collected part, which is thus allowed to be used independently as a product. This allows the number of the horizontal air springs S2 to be attached to be selected in accordance with the specifications of the isolator 2. Even after the product of the isolator 2 is installed, the horizontal air spring S2 can be attached, replaced, or detached as needed.

Since a so-called gimbal piston is employed as the horizontal air spring S2, the natural frequency in the up-down direction can be sufficiently lowered.

### (Other embodiments)

In each of the above embodiments, the fitting recess 28 is formed as a fitting portion in the outer circumferential surface of the inner casing 20 in the up-down air spring S1. However, the present disclosure is not limited to this, and the fitting recess may be formed at the axially inner end portion of the horizontal air spring S2, and a fitting protrusion that projects outward and can be fitted into the fitting recess may be formed as the fitting portion.

In each of the above embodiments, as the load receiving member of the horizontal air spring S2, the cover cap 62 covering the opening 61 of the side plate 60 is disposed to be spaced apart from the piston body 310. However, the present disclosure is not limited to this, and as the load receiving member, the side plate 60 may be directly disposed to be spaced apart from the piston body 310.

In each of the above embodiments, only one each of the horizontal air springs S2 is attached in each of the front, rear, left, and right. However, the present disclosure is not limited to this, and the number of the air springs S2 to be attached may be determined in accordance with the specifications. For example, one, two, or three air springs S2 may be attached, or any one of the air springs S2 may not be attached. When the two air springs S2 are attached, the air springs S2 may be arranged to face each other so that their center axes substantially coincide with each other in the horizontal direction or may be arranged so that the center axes are substantially orthogonal to each other.

In each of the above embodiments, although the active type is used, a passive type may be used, and in both the types, either a gimbal piston or a dome gimbal piston may be provided as the up-down air spring S1 and the horizontal air spring S2, or neither may be provided.

Instead of the air springs S1 and S2, for example, a gas spring filled with nitrogen gas or the like can be used.

In each of the above embodiments, the vibration isolation table A is constituted using the four isolators 2, 2, .... However, the present disclosure is not limited to this, and, for example, for the purpose of vibration damping support of a semiconductor manufacturing apparatus or the like, a mounting board designed exclusively for these apparatuses may be supported by three to four isolators (vibration isolators), or a movable floor to be embedded in a grating floor of a clean room may be supported by the isolators in the same manner.

### INDUSTRIAL APPLICABILITY

The present disclosure can be applied to a gas spring type vibration isolator and the like.

### DESCRIPTION OF REFERENCE CHARACTERS

- A: Precision vibration isolation table
- S1, S2: Air Spring (Gas Spring)
- 2: Isolator (Gas Spring Type vibration isolator)
- 3: Mounting Board (Object to be Supported)
- 10: Base Plate
- 20: Inner Casing (Recess Formation Member)
- 21, 210: Recess
- 22, 220: Opening
- 23, 230: Air Chamber (Gas Chamber)
- 28: Fitting Recess (Fitting Portion)
- 30, 300: Piston
- 31, 310: Piston Body
- 31a, 310a: Central Hole
- 32, 320: Piston Well (Extending Portion)
- 33a: Well Slug (Bottom of Extending Portion)
- 34, 340: Support Rod (Support Column)
- 35: Rolling Element
- 37, 370: Steel Ball
- 40, 400: Diaphragm
- 50: Top Plate (Load Receiving Member)
- 60: Side Plate
- 62: Cover Cap (Load Receiving Member)
- 200: Outer Casing (Recess Formation Member)

## Claims

1. A gas spring type vibration isolator (2) comprising:
an up-down gas spring (S1) that supports an object to be supported in an up-down direction, and
a horizontal gas spring (S2) that horizontally supports the object,
each of the up-down gas spring (S1) and the horizontal gas spring (S2) having:
a recess formation member (20, 200) that has a recess (21, 210) opening outward;
a piston (30, 300) disposed near the opening (22, 220) of the recess (21, 210);
a diaphragm (40, 400) that blocks between the piston (30, 300) and a circumferential edge of the opening (22, 220) of the recess (21, 210) to partition into a gas chamber (23, 230), and
a load receiving member (50, 62), **characterized in that**
the horizontal gas spring (S2) is
configured to be detachably attached to an outer circumferential surface portion of the recess formation member (20) in the up-down gas spring (S 1),
wherein a first load receiving member is a top plate (50) disposed above a piston body (31) of the piston (30) to be spaced apart from the piston body (31) and a second load receiving member is a cover cap (62) disposed on the axially outer side of a piston body (310) of the piston (300) to be spaced apart from the piston body (310), wherein the top plate (50) is formed from a metallic material in a substantially rectangular plate shape, wherein the cover cap (62) is formed from a metallic material in a substantially bottomed and cylindrical shape that opens axially inward, and
wherein the gas spring type vibration isolator (2) further comprises:
upper edges of substantially cross-shaped side plates (60) each having a circular opening (61) formed in a central portion are detachably fastened by bolts to central portions of front, rear, left, and right outer edges of the top plate (50) in the up-down gas spring (S 1) so as to hang downward,
the cover cap (62) in the horizontal gas spring (S2) that covers the opening (61) of the side plate (60) is detachably-fastened to an outer circumferential edge portion of the opening (61) on an outer surface of the side plate (60) at an axially inner end surface of the cover cap (62) by a bolt, and
a tubular portion (240) of the recess formation member (200) in the horizontal gas spring (S2) is inserted into the opening (61) of the side plate (60), and a hollow portion (62a) of the cover cap (62) in the horizontal gas spring (S2) accommodates an axially outer end portion of the recess formation member (200) in the horizontal gas spring (S2) projecting axially outward from the opening (61).

2. The gas spring type vibration isolator (2) of claim 1, wherein
an outer circumferential surface of the recess formation member (20) in the up-down gas spring (S1) has a fitting portion (28) with which the horizontal gas spring (S2) is fitted.

3. The gas spring type vibration isolator (2) of claim 1 or 2, wherein
the horizontal gas spring (S2) is modularized.

4. The gas spring type vibration isolator (2) of any one of claims 1 to 3, wherein
the piston (300) of the horizontal gas spring (S2) has
the cover cap (62); and
a tubular piston body member (310) spaced apart from the load receiving member (62) on the axially other side and elastically held by the diaphragm (400) to be swingable around a freely selected axis in a direction orthogonal to the center axis,
the piston (300) is provided with a support column (340) extending from the cover cap (62) toward the axially other side so as to penetrate a central hole of the piston body member (310),
the piston body member (310) is provided with a bottomed tubular extending portion (320) extending toward the axially other side so as to surround the support column (340), and
a tip of the support column (340) is rotatably abutted on a bottom of the extending portion (320) and pivotally supported.

## Patentansprüche

1. Gasfederartige Schwingungsisolierungseinrichtung (2), Folgendes umfassend:
eine vertikale Gasfeder (S1), die ein zu stützendes Objekt in einer auf-ab-Richtung stützt, und
eine horizontale Gasfeder (S2), die das Objekt horizontal stützt,
wobei die vertikale Gasfeder (S1) und die horizontale Gasfeder (S2) jeweils Folgendes aufweisen:
ein Ausnehmungsausbildungselement (20, 200), das eine Ausnehmung (21, 210) aufweist, die sich nach außen hin öffnet;
einen Kolben (30, 300), der in der Nähe der Öffnung (22, 220) der Ausnehmung (21, 210) angeordnet ist;
eine Membran (40, 400), die zwischen dem Kolben (30, 300) und einem Umfangsrand der Öffnung (22, 220) der Ausnehmung (21, 210) eine Trenneinrichtung bildet, um eine Gaskammer (23, 230) abzutrennen, und
ein Lastaufnahmeelement (50, 62), **dadurch gekennzeichnet, dass** die horizontale Gasfeder (S2) dazu ausgebildet ist, lösbar an einem Außenumfangsflächenabschnitt des Ausnehmungsausbildungselements (20) in der vertikalen Gasfeder (S1) angebracht zu sein,
wobei ein erstes Lastaufnahmeelement eine obere Platte (50) ist, die über einem Kolbenkörper (31) des Kolbens (30) derart angeordnet ist, dass sie von dem Kolbenkörper beabstandet ist, und wobei ein zweites Lastaufnahmeelement eine Abdeckkappe (62) ist, die auf der axialen Außenseite eines Kolbenkörpers (310) des Kolbens (300) derart angeordnet ist, dass sie von dem Kolbenkörper (310) beabstandet ist, wobei die obere Platte (50) aus einem metallischen Material in einer im Wesentlichen rechteckigen Plattenform ausgebildet ist, wobei die Abdeckkappe (62) aus einem metallischen Material in einer Form, die im Wesentlichen mit Boden und zylindrisch ist und die sich axial nach innen öffnet, ausgebildet ist, und
wobei die gasfederartige Schwingungsisolierungseinrichtung (2) des Weiteren umfasst, dass:
obere Ränder von im Wesentlichen kreuzförmigen Seitenplatten (60), von denen jede eine in einem zentralen Abschnitt ausgebildete kreisförmige Öffnung (61) aufweist, durch Bolzen lösbar an zentralen Abschnitten von vorderen, hinteren, linken und rechten äußeren Rändern der oberen Platte (50) in der vertikalen Gasfeder (S1) befestigt sind, derart dass sie nach unten hängen,
die die Öffnung (61) der Seitenplatte (60) abdeckende Abdeckkappe (62) in der horizontalen Gasfeder (S2) lösbar an einem Außenumfangsrandabschnitt der Öffnung (61) auf einer Außenfläche der Seitenplatte (60) an einer axial inneren Endfläche der Abdeckkappe (62) durch einen Bolzen befestigt ist, und
ein rohrförmiger Abschnitt (240) des Ausnehmungsausbildungselements (200) in der horizontalen Gasfeder (S2) in die Öffnung (61) der Seitenplatte (60) eingesetzt ist und ein hohler Abschnitt (62a) der Abdeckkappe (62) in der horizontalen Gasfeder (S2) einen axial äußeren Endabschnitt des
Ausnehmungsausbildungselements (200) in der horizontalen Gasfeder (S2) aufnimmt, wobei der axial äußere Endabschnitt axial nach außen aus der Öffnung (61) ragt.

2. Gasfederartige Schwingungsisolierungseinrichtung (2) nach Anspruch 1, wobei eine Außenumfangsfläche des Ausnehmungsausbildungselements (20) in der vertikalen Gasfeder (S1) einen Montageabschnitt (28) aufweist, mit dem die horizontale Gasfeder (S2) montiert ist.

3. Gasfederartige Schwingungsisolierungseinrichtung (2) nach Anspruch 1 oder 2, wobei
die horizontale Gasfeder (S2) modularisiert ist.

4. Gasfederartige Schwingungsisolierungseinrichtung (2) nach einem der Anspruch 1 bis 3, wobei
der Kolben (300) der horizontalen Gasfeder (S2) Folgendes aufweist:
die Abdeckkappe (62); und
ein rohrförmiges Kolbenkörperelement (310), das von dem Lastaufnahmeelement (62) auf der axial anderen Seite beabstandet ist und durch die Membran (400) elastisch gehalten ist, derart dass es um eine frei gewählte Achse in einer zu der Mittelachse orthogonalen Richtung schwenkbar ist,
der Kolben (300) mit einer Stützsäule (340) versehen ist, die sich von der Abdeckkappe (62) auf die axial andere Seite erstreckt, derart dass sie ein zentrales Loch des Kolbenkörperelements (310) durchdringt,
das Kolbenkörperelement (310) mit einem rohrförmigen Erstreckungsabschnitt (320) mit Boden versehen ist, wobei sich der Erstreckungsabschnitt (320) auf die axial andere Seite erstreckt, derart dass er die Stützsäule (340) umgibt, und eine Spitze der Stützsäule (340) drehbar an einem Boden des Erstreckungsabschnitts (320) anliegt und schwenkbar gelagert ist.

## Revendications

1. Isolateur de vibration (2) à ressort à gaz, comprenant :
un ressort à gaz (S1) vertical qui support un objet à supporter dans une direction haut-bas, et
un ressort à gaz (S2) horizontal qui support l'objet horizontalement,
le ressort à gaz (S1) vertical et le ressort à gaz (S2) horizontal ont chacun :
un élément (20, 200) de formation d'un évidement qui a un évidement (21, 210) qui s'ouvre vers l'extérieur,
un piston (30, 300) disposé près de l'ouverture (22, 220) de l'évidement (21, 210) ;
un diaphragme (40, 400) qui bloque entre le piston (30, 300) et un bord circonférentiel de l'ouverture (22, 220) de l'évidement (21, 210) pour la division en une chambre à gaz (23, 230), et
un élément (50, 62) de réception de charge, **caractérisé en ce que** le ressort à gaz (S2) horizontal est configuré pour être attaché de manière amovible à une partie de surface circonférentielle extérieure de l'élément (20) de formation d'un évidement dans le ressort à gaz (S1) vertical,
dans lequel un premier élément de réception de charge est une plaque supérieure (50) disposée au-dessus d'un corps de piston (31) du piston (30) de manière à être espacée du corps de piston (310) et dans lequel un deuxième élément de réception de charge est un capuchon de recouvrement (62) disposé sur le côté axialement extérieur d'un corps de piston (310) du piston (300) de manière à être espacé du corps de piston (310), dans lequel la plaque supérieure (50) est formée d'un matériau métallique d'une forme de plaque essentiellement rectangulaire, dans lequel le capuchon de recouvrement (62) est formé d'un matériau métallique d'une forme qui est essentiellement avec fond et cylindrique et qui s'ouvre axialement vers l'intérieur, et
dans lequel l'isolateur de vibration (2) à ressort à gaz comprend en outre que :
des bords supérieurs de plaques latérales (60) qui sont essentiellement en forme de croix et desquelles chacune a une ouverture (61) circulaire réalisée dans une partie centrale sont fixés de manière amovible à des parties centrales de bords extérieurs avant, arrière, gauches et droits de la plaque supérieure (50) dans le ressort à gaz vertical (S1) par des boulons de manière à pendre vers le bas,
le capuchon de recouvrement (62) dans le ressort à gaz horizontal (S2) qui couvre l'ouverture (61) de la plaque latérale (60) est fixé de manière amovible à une partie de bord circonférentielle extérieure de l'ouverture (61) sur une surface extérieure de la plaque latérale (60) sur une surface d'extrémité axialement intérieure du capuchon de recouvrement (62) par un boulon, et
une partie tubulaire (240) de l'élément (200) de formation d'un évidement dans le ressort à gaz (S2) horizontal est insérée dans l'ouverture (61) de la plaque latérale (60), et une partie creuse (62a) du capuchon de recouvrement (62) dans le ressort à gaz (S2) horizontal loge une partie d'extrémité axialement extérieure de l'élément (200) de formation d'un évidement dans le ressort à gaz (S2) horizontal, la partie d'extrémité axialement extérieure faisant saillie axialement vers l'extérieur de l'ouverture (61).

2. Isolateur de vibration (2) à ressort à gaz selon la revendication 1, dans lequel une surface circonférentielle extérieure de l'élément (20) de formation d'un évidement dans le ressort à gaz (S1) vertical a une partie de montage (28) avec laquelle le ressort à gaz (S2) horizontal est monté.

3. Isolateur de vibration (2) à ressort à gaz selon la revendication 1 ou 2, dans lequel le ressort à gaz (S2) horizontal est modularisé.

4. Isolateur de vibration (2) à ressort à gaz selon l'une quelconque des revendications 1 à 3, dans lequel
le piston (300) du ressort à gaz (S2) horizontal a
le capuchon de recouvrement (62) ; et
un élément (310) de corps de piston espacé de l'élément (62) de réception de charge sur le côté axialement opposé et retenu élastiquement par le diaphragme (400) de manière à être pivotant autour d'un axe librement choisi dans une direction orthogonale par rapport à l'axe central,
le piston (300) est pourvu d'une colonne de support (340) qui s'étend du capuchon de recouvrement (62) vers le côté axialement opposé de manière à pénétrer un trou central de l'élément (310) de corps de piston,
l'élément (310) de corps de piston est pourvu d'une partie d'extension (320) tubulaire avec fond, ladite partie d'extension (320) s'étendant vers le côté axialement opposé de manière à entourer la colonne de support (340), et
un bout de la colonne de support (340) repose de manière rotative sur un fond de la partie d'extension (320) et est supporté de manière pivotante.
